# EUROPEAN PATENT APPLICATION

(11) **EP 2 015 483 A2**
(43) Date of publication of application: **14.01.2009**
(21) Application number: 08152216.1
(22) Date of filing: 03.03.2008
(51) Int. Cl.: H04H 60/27

(54) **Broadcast Processing Apparatus And Control Method Thereof**

(30) Priority: 09.07.2007 KR 20070068573
(71) Applicant: SAMSUNG ELECTRONICS CO., LTD., Suwon-si, Gyeonggi-do (KR)
(72) Inventor: Lee, Dong-heon, Suwon-si, Gyeonggi-do (KR); Lee, Sang-hee, Seoul (KR)
(74) Representative: Brandon, Paul Laurence

(57) **Abstract**

A broadcast processing apparatus which has a time shift function, includes: a buffer unit (50) which buffers a broadcast signal; a selection unit (40) which is provided to select a broadcast signal recording function; a storage unit (60); a user interface (UI) generator (70) which generates UI information; a display unit (30); and a controller (80) which controls the UI generator to display the UI information on the display unit and select a recording range of the buffered broadcast signal and records the broadcast signal corresponding to the selected recording range in the storage unit if the broadcast signal recording function is selected.

## Description

### BACKGROUND OF THE INVENTION

### Field of the Invention

Apparatuses and methods consistent with the present invention relate to broadcast processing apparatus and control methods thereof.

### Description of the Related Art

A video cassette recorder (VCR) has been widely used to record an analog broadcast signal with a tape medium. However, a digital broadcast may be recorded by a plurality of different types of recording media such a digital VCR, a hard disc drive (HDD), an optical disk recording device using an optical disk, etc. Particularly, as the relative technology progresses rapidly, recording capacities of HDDs have increased up to giga bytes, i.e., several dozen or hundred times the recording capacity of a tape medium.

A digital television (TV) receiver which is equipped with various additional functions has appeared corresponding to the digital broadcast and various needs of users. For example, an additional function of the digital TV is a personal video recorder (PVR), which provides various playing functions, using a large capacity HDD. That is, the PVR stores audio and video information in a digital format unlike an analog VCR tape and ensures a picture quality without losing information even if it records and plays unlimitedly.

The PVR displays information such as a weekly broadcast schedule, favorite channels, genre guides of programs on a TV screen and provides reservation recording, temporary pause in live broadcast, recording the temporarily-paused live broadcast, replaying, 32-speed detection function, etc. Noticeably, the PVR provides a time shift function, which temporarily pauses the live TV program that is currently viewed to access a stored program or record a plurality of programs simultaneously.

### SUMMARY OF THE INVENTION

Preferred embodiments of the present invention aim to provide a broadcast processing apparatus and a control method thereof which records a desired broadcast signal more easily with a time shift function.

Preferred embodiments of the present invention also aim to provide a broadcast processing apparatus and a control method thereof which displays user interface (UI) information to record a broadcast signal efficiently.

According to an aspect of the present invention, there is provided a broadcast processing apparatus including: a buffer unit which buffers a broadcast signal; a user selection unit which is provided to select a broadcast signal recording function; a storage unit; a UI generator which generates UI information; a display unit; and a controller which controls the UI generator to display the UI information on the display unit and select a recording range of the buffered broadcast signal and records the broadcast signal corresponding to the selected recording range in the storage unit if the broadcast signal recording function is selected.

The controller may control the buffer unit to buffer the received broadcast signal, and control the UI generator to display a time shift display bar on the display unit.

The controller may control the UI generator to display a program title of the buffered broadcast signal and time information on the buffered broadcast signal in the time shift display bar if the broadcast signal recording function is selected.

The controller may control the UI generator to display a slide bar in the time shift display bar to select the recording range if the broadcast signal recording function is selected.

The controller may display the broadcast signal on the display unit corresponding to a recording starting point if the recording starting point is selected through the user selection unit.

The controller may display the broadcast signal on the display unit corresponding to a recording ending point if the recording ending point is selected through the user selection unit.

The controller may control the UI generator to display a recording confirmation window on the display unit to confirm the recording of the selected recording range if the recording range is selected.

According to another aspect of the present invention, there is provided a broadcast processing apparatus, including: a buffer unit which buffers a broadcast program; a user selection unit which is provided to select one of a time shift function and a broadcast program recording function; a UI generator which generates UI information; a display unit; and a controller which controls the buffer unit to buffer the received broadcast program if the time shift function is selected through the user selection unit, and controls the UI generator to display UI information on the display unit so that a user selects a recording range of the buffered broadcast program if the broadcast program recording function is selected.

The controller may control the UI generator to display at least one of a time shift display bar illustrating a buffering state of the broadcast program, a buffered broadcast program title, time information on the buffered broadcast program and a slide bar to select the recording range, on the display unit if the broadcast program recording function is selected.

The broadcast processing apparatus may further include a storage unit, wherein the controller records the broadcast program corresponding to the selected recording range in the storage unit.

The controller may control the UI generator to display a confirmation window on the display unit to confirm the recording of the selected recording range if the recording range is selected.

According to another aspect of the present invention, there is provided a control method of a broadcast processing apparatus, the control method including: receiving a selection signal to select a broadcast signal recording function; displaying UI information to select a recording range of a buffered broadcast signal; and recording a broadcast signal corresponding to the selected recording range.

The control method may further include buffering a broadcast signal before receiving the selection signal.

The UI information may include at least one of a time shift display bar illustrating a buffering state of the broadcast signal, a program title of the buffered broadcast signal, time information on the buffered broadcast signal and a slide bar to select the recording range.

The control method may further include displaying the broadcast signal corresponding to a recording starting point if the recording starting point is selected through the slide bar.

The control method may further include displaying the broadcast signal corresponding to a recording ending point if the recording ending point is selected through the slide bar.

The control method may further include displaying a confirmation window to confirm the recording of the selected recording range if the recording range is selected.

### BRIEF DESCRIPTION OF THE DRAWINGS

The present invention will become apparent and more readily appreciated from the following description of exemplary embodiments, taken in conjunction with the accompany drawings of which:
FIG. 1 is a control block diagram of a broadcast processing apparatus according to an exemplary embodiment of the present invention;
FIG. 2 illustrates a time shift display bar according to an exemplary embodiment of the present invention;
FIG. 3 illustrates time shift display bar according to another exemplary embodiment of the present invention;
FIGS. 4A and 4B illustrate UI information to describe a program recording according to an exemplary embodiment of the present invention;
FIG. 5 illustrates a recording confirmation window according to an exemplary embodiment of the present invention; and
FIG. 6 is a control flowchart of a control method of the broadcast processing apparatus according to an exemplary embodiment of the present invention.

### DETAILED DESCRIPTION OF EXEMPLARY EMBODIMENTS OF THE PRESENT INVENTION

Hereinafter, exemplary embodiments of the present invention will be described with reference to accompanying drawings, wherein like numerals refer to like elements and repetitive descriptions will be avoided as necessary. The present invention, however, may be realized as various types, and is not limited to the exemplary embodiments.

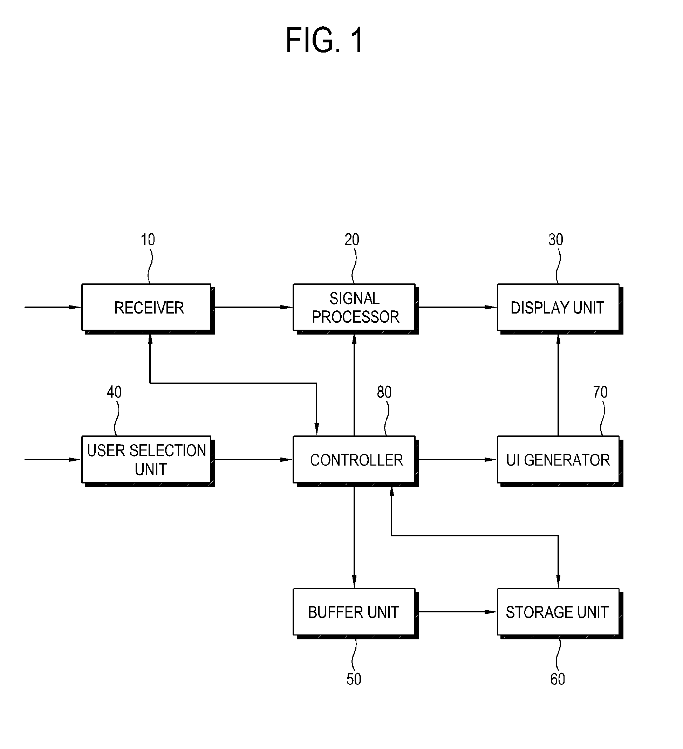

FIG. 1 is a control block diagram of a broadcast processing apparatus according to an exemplary embodiment of the present invention. The broadcast processing apparatus may be embodied as a set-top box or a digital TV which includes a set-top box incorporated therein. Particularly, the broadcast processing apparatus according to the present exemplary embodiment includes a PVR which provides a time shift function that temporarily pauses a live program being currently viewed, and accesses a stored program or records a plurality of programs simultaneously.

The broadcast processing apparatus includes a receiver 10, a signal processor 20, a display unit 30, a user selection unit 40, a buffer unit 50, a storage unit 60, a UI generator 70 and a controller 80 which controls the foregoing elements.

The receiver 10 receives a broadcast signal from an external source. The broadcast signal includes broadcast programs having various contents, a broadcast program schedule, information on broadcast programs having genre guides, data broadcast, etc. The receiver 10 includes an antenna (not shown), a tuner (not shown) which is synchronized with a certain frequency and tunes a broadcast signal corresponding to a frequency of a desired channel, and a low noise amplifier (not shown) which amplifies the broadcast signal input to the tuner.

The signal processor 20 includes an audio processor (not shown) and a video processor (not shown), and separately processes the received broadcast signal to provide an audio signal and a video signal. The audio processor decodes the audio signal of the received broadcast signal according to a predetermined standard, for example, the MPEG standard or the Dolby standard, and amplifies and outputs the audio signal. The video processor decodes the video signal of the broadcast signal input from the receiver 10 according to a predetermined standard, and amplifies and outputs the video signal to the display unit 30.

The display unit 30 displays the video signal of a broadcast program and UI information generated by the UI generator 70 thereon. The display unit 30 may include a liquid crystal display (LCD) panel, an organic light emitting diode (OLED) panel, a plasma display panel (PDP), etc. If the display unit 30 displays only the UI information, the broadcast processing apparatus may be embodied as a set-top box.

The user selection unit 40 generates a selection signal to select a time shift function or a broadcast signal recording function, particularly, a broadcast program recording function, and outputs various control signals according to user's inputs. The user selection unit 40 may include an additional hot key or a touch pad on select the time shift function or the broadcast program recording function, or a remote controller wirelessly communicating with the broadcast processing apparatus. The hot key or the touch pad may be provided on an external surface of the broadcast processing apparatus. The touch pad may include a touch panel of the display unit 30. The user selection unit 40 may include general input units such as a keyboard and a mouse.

The buffer unit 50 buffers the broadcast program according to a control generated by the controller 80 if the time shift function is selected through the user selection unit 40. The buffering time for buffering the broadcast program may be set as a default value such as 30 minutes or one hour. A user may set or change the buffering time via the user selection unit 40 and the UI generator 70. The time shift function is a preliminary function to record the broadcast program, and refers to temporarily storing the currently-received broadcast signal in the broadcast processing apparatus. The time shift function is performed regardless of whether the broadcast program is displayed on the display unit 30 or whether the broadcast program is recorded. A user may temporarily pause, store and play the currently-viewed broadcast program with the time shift function. That is, the broadcast program may be stored and played simultaneously at predetermined time intervals.

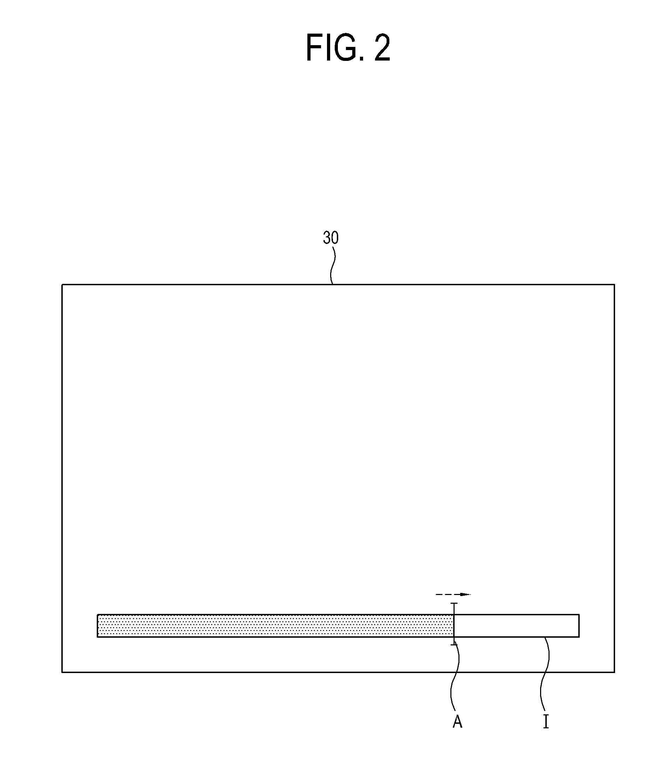

FIG. 2 illustrates a time shift display bar according to an exemplary embodiment. If the time shift function is selected, the time shift display bar I displays the current buffering of the broadcast program among the overall buffering time. The time shift display bar I includes a slide bar A which displays the buffered amount of the broadcast program. The slide bar A moves in a direction of the arrow (i.e., left to right) according to elapsed time. A user may move the slide bar A to play the buffered broadcast program.

The storage unit 60 records the broadcast program corresponding to a recording range selected by the user selection unit 40. The storage unit 60 includes a large capacity HDD.

The UI generator 70 generates various UI information to record the broadcast program according to the control of the controller 80 so that the UI information is displayed on the display unit 30. The UI information will be described later with reference to FIGS. 2 to 4.

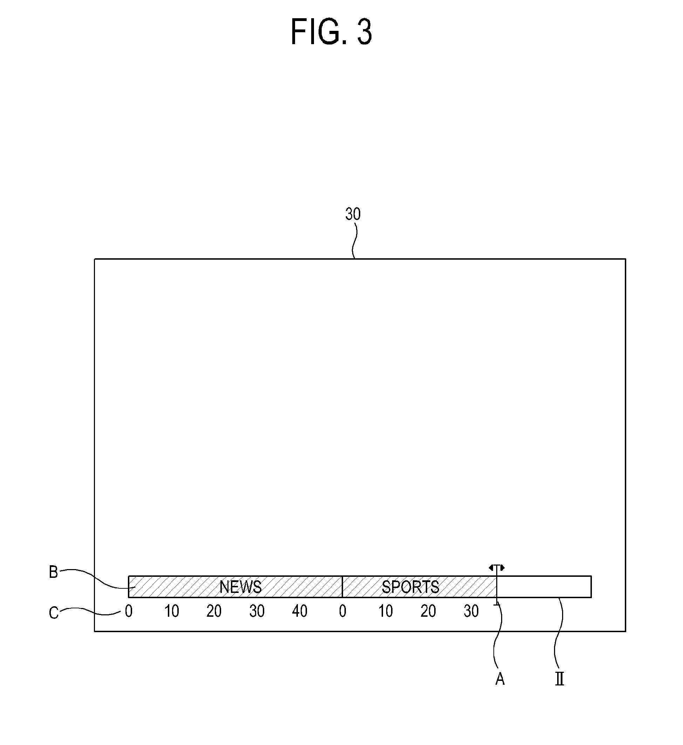

If the broadcast program recording function is selected, the controller 80 controls the UI generator 70 to display the UI information on the display unit 30 so that a user selects the recording range of the buffered broadcast program, and records the broadcast program corresponding to the selected recording range in the storage unit 60. FIG. 3 illustrates the UI information, i.e., a time shift display bar II displayed on the display unit 30 when the broadcast program recording function is selected. As shown therein, the time shift display bar II displays a buffered broadcast program title B and time information C on the buffered broadcast program. Also, a slide bar A is displayed to illustrate the buffered amount of the broadcast program. A user may move the slide bar A to set the recording range of the broadcast program.

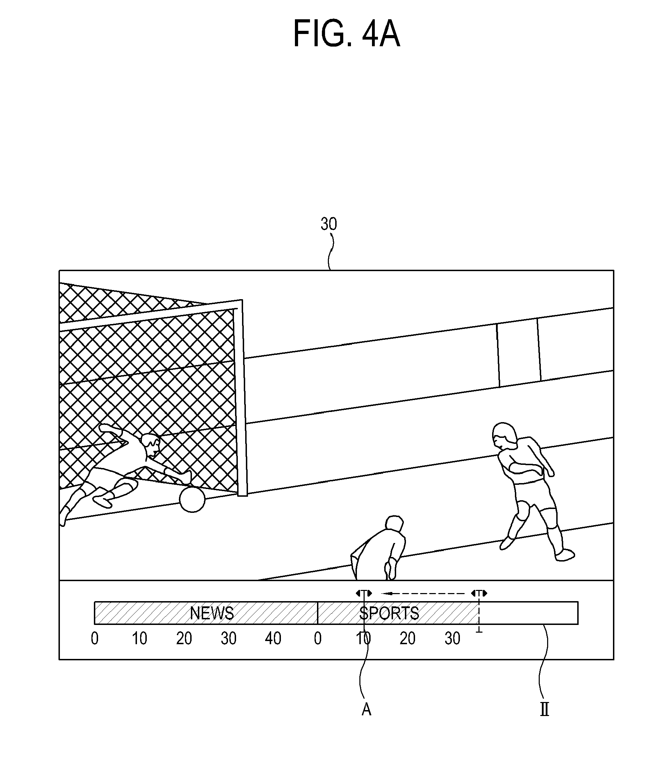

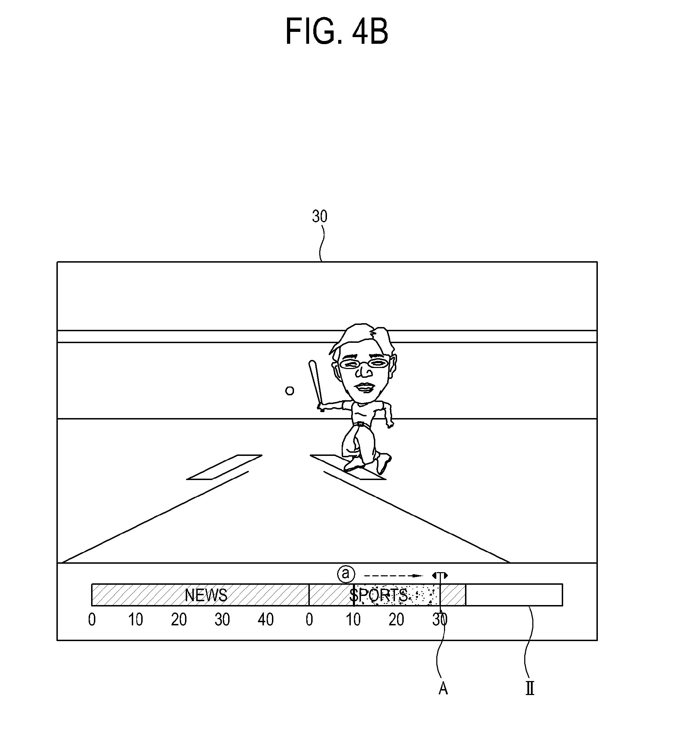

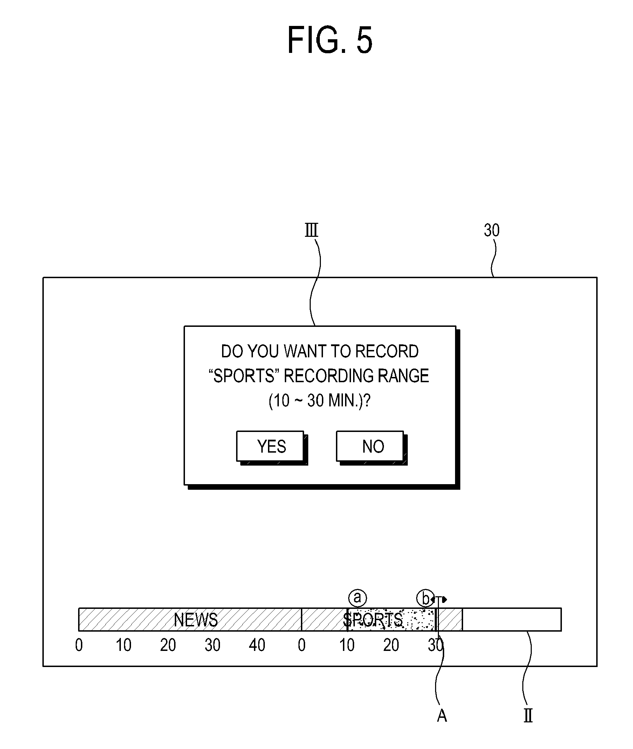

FIGS. 4A and 4B illustrate the setting of the recording range by moving the slide bar A. A user moves the slide bar A from a current point to the left with the user selection unit 40 to select a starting point or an ending point of the recording range. The slide bar A may be moved, for example, by manipulating a direction key or touching a touch pointer. A single manipulation of the direction key may be set to move the slide bar A by a particular amount, e.g. ten minutes or five minutes of the broadcast program. If the particular range is determined by manipulating an execution key, etc. after the slide bar A is moved, a thick line ⓐ appears in the time shift display bar II as shown in FIG. 4B. If the slide bar A is moved to the right and the execution key is manipulated, a thick line ⓑ appears again as shown in FIG. 5. That is, a user may record the particular range among the broadcast program by moving the slide bar A to the left and right in the time shift display bar II. A user may store the particular range to be recorded as well as recording the overall broadcast program, thereby enhancing usage of the time shift function. While the slide bar A moves and selects the recording range, the slide bar A moving area of the time shift display bar II may be displayed in different color or in a particular pattern to identify the buffered broadcast program and the broadcast program to be recorded.

If the slide bar A is moved, the display unit 30 displays a broadcast signal of the buffered part. If the recording starting point is selected, the display unit 30 displays the broadcast program corresponding to the recording starting point. If the recording ending point is selected, the display unit 30 displays the broadcast program corresponding to the recording ending point. Thus, a user may directly view the screen of the broadcast program to be recorded.

If a user selects the recording range, the controller 80 controls the UI generator 70 to display a recording confirmation window III on the display unit 30 to confirm the recording of the selected recording range as shown in FIG. 5. The recording range which is selected by a user may be displayed in a different color or in a different pattern to be distinguished from the buffered range of the broadcast program. The mark which displays the recording range may include an additional display bar other than the time shift display bar II.

The recording confirmation window III displays the program title, a message informing time of the recording ranges ⓐ-ⓑ ("Do you want to record "SPORTS" recording range (10-30 minutes)?"), and selection items "YES" and "NO" to select whether to record or cancel the recording of the broadcast program. A user may confirm or adjust the recording range through the recording confirmation window III.

If a user selects "YES", the controller 80 records the broadcast program corresponding to the recording range in the storage unit 60.

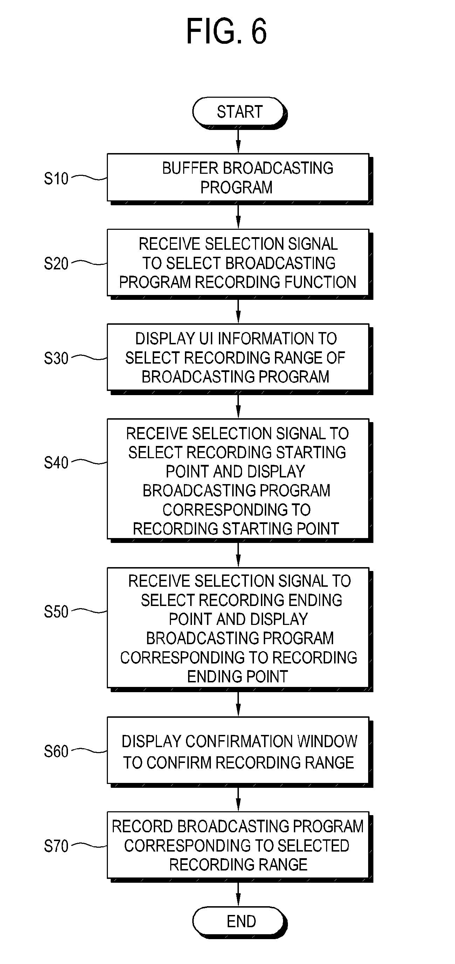

FIG. 6 is a control flowchart which describes a control method of the broadcast processing apparatus according to an exemplary embodiment.

First, the buffer unit 50 buffers the broadcast program according to the time shift function (S10). The time shift function may be selected by a user or may be automatically performed if power is supplied to the broadcast processing apparatus and the channel of the broadcast signal is tuned. If the time shift function is selected, the time shift display bar I may be displayed on the display unit 30 as shown in FIG. 2.

If the selection signal is received from the user selection unit 40 to select the broadcast program recording function (S20), the controller 80 generates the UI information to select the recording range of the broadcast program, and displays the UI information on the display unit 30 (S30). The UI information includes the time shift display bar II, the buffered broadcast program title B, the time information C on the buffered broadcast program, and the slide bar A to select the recording range.

The selection signal is then received to select the recording starting point and the recording ending point, and the broadcast program corresponding to the recording starting point and the recording ending point is displayed (S40 and S50). The selection order of the recording starting point and ending point is not necessarily predetermined. Instead, the selection order of the recording starting point and ending point is determined by the point selected by a user moving the slide bar A.

If the recording range is set by a user, the controller 80 displays the recording confirmation window III to confirm the recording range (S60). The recording confirmation window III displays the program title, the informing message to inform the time of the recording range and the selection items to record or cancel the recording of the broadcast program.

If a user confirms the recording range and selects to record the broadcast program, the controller 80 stores the broadcast program corresponding to the selected recording range in the storage unit 60 (S70).

Alternatively, the broadcast program may be compressed before being stored in order to save the capacity of the storage unit 60. Also, the resolution of the broadcast signal may be lowered to save the capacity of the storage unit 60. The buffer unit 50 and the storage unit 60 may be provided as a single unit instead of individual units. In this case, a write-protection function may be employed to protect the recorded broadcast program.

As described above, the exemplary embodiments of the present invention provide a broadcast processing apparatus which records a desired broadcast signal more easily with a time shift function, and a control method thereof.

Also, the exemplary embodiments of the present invention provide a broadcast processing apparatus which displays UI information so that a user records a broadcast signal efficiently, and a control method thereof.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast processing apparatus comprising:
a buffer unit (50) which buffers a broadcast signal;
a selection unit (40) through which a broadcast signal recording function is selectable;
a storage unit (60);
a user interface (UI) generator (70) which generates UI information;
a display unit (30); and
a controller (80) which controls the UI generator to display the UI information on the display unit and select a recording range of the buffered broadcast signal, and records the broadcast signal corresponding to the selected recording range in the storage unit if the broadcast signal recording function is selected through the selection unit.

2. The broadcast processing apparatus according to claim 1, wherein the controller (80) controls the buffer unit (50) to buffer the broadcast signal, and controls the UI generator (70) to display a time shift display bar on the display unit (30).

3. The broadcast processing apparatus according to claim 2, wherein the controller (80) controls the UI generator (70) to display a program title of the buffered broadcast signal and time information regarding the buffered broadcast signal in the time shift display bar if the broadcast signal recording function is selected.

4. The broadcast processing apparatus according to claim 3, wherein the controller (80) controls the UI generator (70) to display a slide bar in the time shift display bar to select the recording range if the broadcast signal recording function is selected.

5. The broadcast processing apparatus according to claim 4, wherein the controller (80) displays the broadcast signal on the display unit (30) corresponding to a recording starting point selected through the selection unit (40).

6. The broadcast processing apparatus according to claim 4, wherein the controller (80) displays the broadcast signal on the display unit (30) corresponding to a recording ending point selected through the selection unit (40).

7. The broadcast processing apparatus according to anyone of claims 4-6, wherein the controller (80) controls the UI generator (70) to display a recording confirmation window on the display unit (30) to confirm the recording of the selected recording range.

8. A broadcast processing apparatus comprising:
a buffer unit (50) which buffers a broadcast program;
a selection unit (40) through which at least one of a time shift function and a broadcast program recording function is selectable;
a user interface (UI) generator (70) which generates UI information;
a display unit (30); and
a controller (80) which controls the buffer unit to buffer the received broadcast program if the time shift function is selected through the selection unit, and controls the UI generator to display UI information on the display unit in order to a recording range of the buffered broadcast program if the broadcast program recording function is selected.

9. The broadcast processing apparatus according to claim 8, wherein the controller (80) controls the UI generator (70) to display on the display unit (30) at least one of a time shift display bar indicating a buffering state of the buffered broadcast program, a program title of the buffered broadcast program, time information regarding the buffered broadcast program, and a slide bar to select the recording range, if the broadcast program recording function is selected.

10. The broadcast processing apparatus according to claim 8, further comprising a storage unit (60),
wherein the controller (80) records the broadcast program corresponding to the selected recording range in the storage unit.

11. The broadcast processing apparatus according to any one of claims 8-10, wherein the controller (80) controls the UI generator (30) to display a confirmation window on the display unit (30) to confirm the recording of the selected recording range.

12. A control method of a broadcast processing apparatus, the control method comprising:
receiving a selection signal to select a broadcast signal recording function;
displaying user interface (UI) information to select a recording range of a buffered broadcast signal; and
recording a broadcast signal corresponding to the selected recording range.

13. The control method according to claim 12, further comprising buffering the broadcast signal before receiving the selection signal.

14. The control method according to claim 12, wherein the UI information comprises at least one of a time shift display bar indicating a buffering state of the buffered broadcast signal, a program title of the buffered broadcast signal, time information regarding the buffered broadcast signal, and a slide bar to select the recording range.

15. The control method according to claim 14, further comprising displaying the broadcast signal corresponding to a recording starting point selected through the slide bar.

16. The control method according to claim 14 or claim 15, further comprising displaying the broadcast signal corresponding to a recording ending point selected through the slide bar.

17. The control method according to any one of claims 14-16, further comprising displaying a confirmation window to confirm the recording of the selected recording range.
